# EUROPEAN PATENT APPLICATION

(11) **EP 1 335 331 A2**
(43) Date of publication of application: **13.08.2003**
(21) Application number: 02020297.4
(22) Date of filing: 11.09.2002
(51) Int. Cl.: G07F 7/08, G07F 19/00

(54) **Settlement system**

(30) Priority: 06.02.2002 JP 2002029497
(71) Applicant: FUJITSU LIMITED, Kawasaki-shi, Kanagawa 211-8588 (JP)
(72) Inventor: Haeno, Tadashi, c/o Fujitsu Kiden Ltd., Inagi-shi, Tokyo 206-8555 (JP); Hashimoto, Shigeru, c/o Fujitsu Kiden Ltd., Inagi-shi, Tokyo 206-8555 (JP); Yamamoto, Koken, c/o Fujitsu Kiden Ltd., Inagi-shi, Tokyo 206-8555 (JP)
(74) Representative: Moutard, Pascal Jean

(57) **Abstract**

In a settlement system comprising an IC card terminal (a transaction medium terminal), a settlement terminal and a settlement server, IC card based settlement processing that the IC card terminal has so far executed, is distributed to the settlement terminal and the settlement server as well. The distribution would reduce load of processing by the IC card terminal, and because of the reduced load, the IC card terminal would not any more require a CPU with a high processing capability or a large capacity of memory, contributing to low-costing of the IC card terminal, and eventually, allowing the total settlement system to embody low-costing.

## Description

### BACKGROUND OF THE INVENTION

### 1. Field of the Invention

The present invention relates generally to a settlement system and a settlement method for executing settlement of accounts using a transaction medium (e.g., an IC card) that stores information on at least one settlement function, and more particularly, to a settlement system that allows a total system to reduce costs, by distributing of a plurality of processing steps in settlement processing using the IC card to each of an IC card processing terminal, a settlement terminal and a settlement server.

### 2. Description of the Related Arts

The IC card is a plastic card in which a CPU and an LSI chip with a stored memory (ROM, RAM, etc.) are embedded. As this card can ensure higher security and store a larger data amount, compared to the conventional magnetic card, only one card can embody a plurality of settlement functions including a credit card, electronic money, etc. The IC card communicates with an IC card-processing terminal (hereinafter to be simply referred to as "IC card terminal). And, according to the control of the IC card terminal, the CPU in the LSI chip executes an application program (including the OS) to be stored in memory, to embody the individual settlement functions.

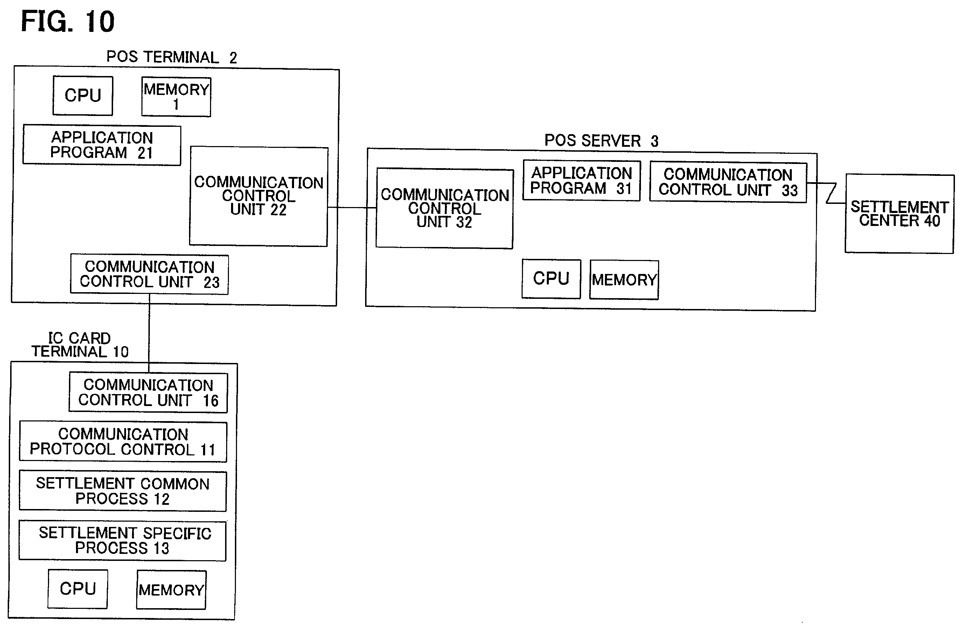

Fig. 10 shows a configuration example of the conventional settlement system using the IC card. The settlement system shown in Fig. 10 is a system using, for instance, a POS system for stores like a supermarket, a convenience store, etc. The POS system is a system to execute a POS (Point of Sales) job, including management of merchandise sales information, and comprises a POS terminal 2 and a POS server 3 to connect to that for making communication. Each of the POS terminal 2 and the POS server 3 is a computer device having a CPU and memory to store a program necessary for POS processing and a data file (POS program data). Also, the POS terminal 2 includes a communication control unit 22 for making communication with the POS server 3, and a communication control unit 23 for making communication with an IC card terminal 10, and the POS server 3 includes a communication control unit 32 for making communication with the POS terminal 2, and a communication control unit 33 for connecting to an external network. Here, either wired or non-wired system can be used.

The IC card terminal 10 to execute reading or writing to the IC card is a computer device having a CPU and memory, and connects to the POS terminal 2 through a communication control unit 16. When settlement of accounts is to be made using a credit function of the IC card, since the IC card terminal 10 has to obtain an authentication from a credit card company, it connects to a settlement center 40 of the credit card company through the POS server 3, using a given communication line.

In such a configuration as described above, the conventional IC card terminal 10 stores a program for settlement, and the settlement program includes three-layered processes as described below.
(1) Communication protocol control process 11
   Data send/receive control processing toward the IC card
   Communication protocol control
   Checking error, etc.
(2) Settlement common processing 12
   Credit card company-independent common data processing
   Selecting application in IC card
   Validating PIN (Personal Identification Number), etc.
(3) Specific settlement processing 13
   IC card company-by-company specific data processing
   Checking IC card used for payment for its acceptability
   Checking if it is necessary or not to ask settlement center about contents of transaction
   And the IC card terminal 10 has so far processed all of the processes 11, 12 and 13 at each layer as described above.

However, if all of the above processes 11, 12 and 13 making up the settlement program are mounted on the IC card terminal 10, there would be a problem that the IC card terminal 10 would be excessively loaded, causing price for the device to soar up. The reason is that in such a case a CPU must have high processing capability and the capacity of memory must be large enough. Also, as the IC card terminal 10 must be placed in each selling section of a store where settlement processing is performed, the required number must be larger than the number of the POS servers 3 and the POS terminals 2, if a relatively large-scaled settlement system is to be built up. For instance, in the case of an owner having a plurality of stores, and installing one POS server 3 at its main office, and pre-determined plural number of POS terminals 2 at each store, usually, the required number of the IC card terminals 10 to be installed at each store must be larger than the number of the POS terminals 2. Therefore, as the required number of the IC card terminals 10 is the largest in the settlement system, a problem occurs that when price for the IC card terminal 10 becomes higher, price for the total settlement system could also soar up.

Also, when any change is made in settlement specific process having a process intrinsic to each credit card company, changing the settlement system has not so far been easy in terms of costs and time, because it has been usually required to collect all of the IC card terminals 10 and re-write the program stored in the IC card terminal 10.

### SUMMARY OF THE INVENTION

It is therefore the object of the present invention to realize a low-cost settlement system to execute settlement processing using the IC card.

In order to achieve the above purpose, in the settlement system comprising an IC card terminal (transaction medium terminal), a settlement terminal and a settlement server, under the present invention. Settlement processing by the IC card that has so far been performed by the IC card terminal is to be distributed to the settlement terminal and the settlement server. This distribution would reduce processing load by the IC card terminal, and the IC card terminal would no more need a CPU having high processing capability or a large capacity of memory, so that cost of the IC card terminal can be reduced and the total settlement system can embody low-costing.

Settlement processing comprising a plurality of processing steps is distributed, for instance, as described below, and the distributed processes are allocated to the transaction medium terminal, the settlement terminal and the settlement server. In a first example of allocation, of a plurality of processes, processing to read and write information toward the transaction medium is allocated to the transaction medium processing terminal, and to the settlement terminal, processing common to a plurality of settlement functions is allocated, and to the settlement server, processing intrinsic to each of a plurality of settlement functions is allocated.

Also, in a second example of allocation, of a plurality of processing steps, process to read and write information against the transaction medium is allocated to the transaction medium processing terminal, and to the settlement terminal, process with relatively low change frequencies is allocated, and further, to the settlement server, processing with relatively high change frequencies is allocated.

Moreover, in a third example of allocation, of a plurality of processing steps, process to read and write information against the transaction medium is allocated to the transaction medium processing terminal, and to the settlement terminal, process that requires external data input is allocated, and further, to the settlement server, process with relatively high change frequencies is allocated.

### BRIEF DESCRIPTION OF THE DRAWINGS

Fig. 1 shows a first configuration example of the settlement system in the embodiment of the present invention;
Fig. 2 is a flowchart of settlement processing in the embodiment of the present invention;
Fig. 3 is a flowchart of settlement processing in the embodiment of the present invention;
Fig. 4 shows a second configuration example of the settlement system in the embodiment of the present invention;
Fig. 5 shows a third configuration example of the settlement system in the embodiment of the present invention;
Fig. 6 shows a fourth configuration example of the settlement system in the embodiment of the present invention;
Fig. 7 describes about authentication processing method;
Fig. 8 shows a fifth configuration example of the settlement system in the embodiment of the present invention;
Fig. 9 shows a configuration example of the settlement system that includes a settlement server mounting a settlement board; and
Fig. 10 shows a configuration example of the conventional settlement system using the IC card.

### DESCRIPTION OF THE PREFERRED EMBODIMENTS

Embodiments of the present invention will now be described. It is to be noted however that the technical scope of the present invention is not limited to the embodiments.

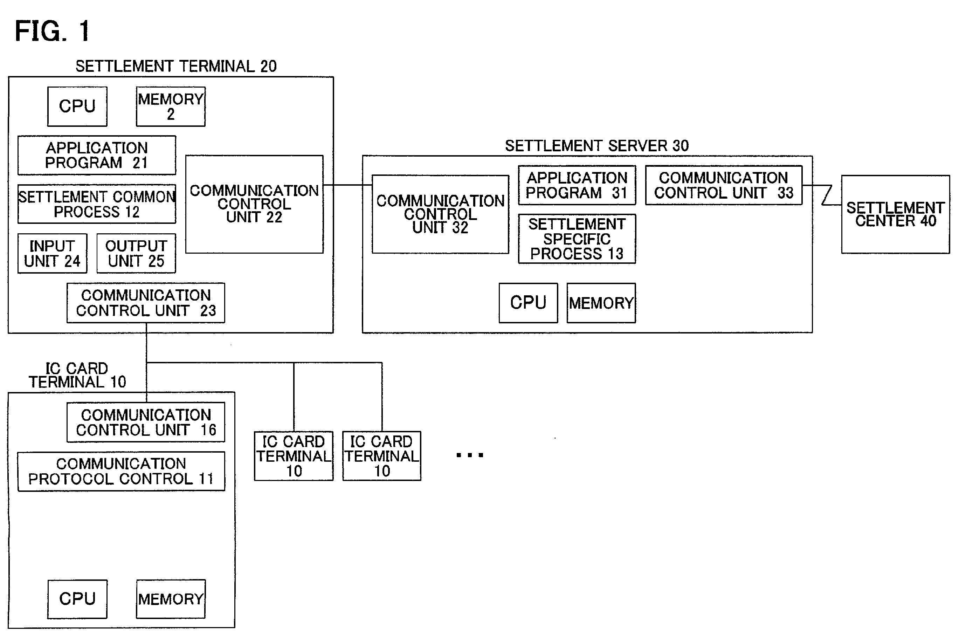

Fig. 1 shows a first configuration example of the settlement system in the embodiment of the present invention. The first configuration example is configured with an IC card terminal 10, a settlement terminal 20 and a settlement server 30, and the settlement server 30 can communicate with the settlement center 40 of a credit card company through a network. The settlement terminal 20 and the settlement server 30 are, for instance, as shown in Fig. 21, a POS terminal and a POS server in a POS system.

The settlement terminal 20 and the settlement server 30 are computer devices with a CPU and memory, and they can store application programs 21 and 31 for other processes than IC card settlement processing (for instance, POS job). Also, the settlement terminal 20 has a communication control unit 22 for making communication with the settlement server 30, and a communication control unit 23 for making communication with the IC card terminal 10, and further, the settlement server 30 has a communication control unit 32 for making communication with the settlement terminal 20, and a communication control unit 33 to connect to an external network. Here, communication can be made either by wired or non-wired system. Moreover, the settlement terminal 20 has an input unit 24 like a numeric keypad, and an output unit (display unit) 25 like a liquid crystal display. For information, the IC card terminal 10 in the first configuration example is not required to have an I/O unit.

The IC card terminal 10 to execute reading and writing against the IC card is a computer device with a CPU and memory, and connects to the settlement terminal 20 through a communication control unit 16. Also, when settlement is made using of a credit function of the IC card, as the IC card terminal 10 needs an authentication of a credit card company, it connects to the settlement center 40 of a credit card company through the settlement server 30, using a pre-determined communication line.

In the settlement system configured as described above, the number of the IC card terminals 10 is more than the numbers of the settlement terminals 20 and the settlement servers 30, and further, the number of the settlement terminals 20 is more than the number of the settlement servers 30.

In such a configuration, a communication protocol control process 11, a settlement common process 12 and a settlement specific process 13, which are component elements of a settlement program (settlement process) required for IC card settlement, are distributed to the IC card terminal 10, the settlement terminal 20 and the settlement server 30, respectively.

The settlement program for IC card settlement has, as described in the conventional technology, three-layered structure: i.e., the communication protocol control process 11 to control communication between the IC card and the IC card terminal, the settlement common process 12, that is to say a process common to credit card companies, and the settlement specific process 13 intrinsic to credit card company-by-company. In this embodiment, the feature is that a portion of the three-layered processes, all of which the IC card terminal has so far processed, are distributed to the settlement terminal 20 and the settlement server 30.

As described above, through the distribution of each process making up the settlement program not only to the IC card terminal 10, but also to the settlement terminal 20 and the settlement server so, processing load of the IC card terminal 10 can be reduced. In other words, as the IC card terminal 10 can be made up by a relatively cheap CPU and relatively small capacity of memory, cost reduction of the IC card terminal 10 can be expected, therefore, a low-cost settlement system can be embodied, as price for the IC card terminal is expected to come down, and a larger number of the IC card terminals compared to the other elements is required for the settlement system.

For instance, in the first configuration example shown in Fig. 1, the settlement specific process 13 is allocated to the settlement server 30, and to the settlement terminal 20, the settlement common process 12 is allocated. Furthermore, the communication protocol control process 11 is mounted on the IC card terminal 10 which makes direct communication with the IC card, as was mounted previously.

In other words, the settlement specific process 13 is a process intrinsic to credit card company-by-company, and needs program change at relatively close intervals. Therefore, the settlement specific process 13 is allocated to a smaller number of the settlement servers 30 in the settlement system. By this allocation, when the program is to be changed, compared to the case when the program must be changed as to the relatively larger number of the IC card terminals 10, the number of devices that need program change becomes smaller, and maintenance of the settlement system can be made easily. Moreover, as the IC card terminal will not execute the settlement specific process with relatively larger load, processing load of the IC card terminal 10 can be reduced, and the IC card terminal 10 can be configured using a CPU having a relatively low processing capability and relatively small capacity of memory, so that low-cost IC card terminal can be embodied.

Also, the settlement common process 12, where program change will rarely take place, includes process that needs input from customers, like settlement amount or PIN, and needs an input device (numeric keypad, etc.) and relatively large capacity of memory to hold the entered data, as well. Therefore, the settlement common process 12 is allocated to the settlement terminal 20 that has a larger processing capability than the IC card terminal 10. If the settlement terminal 20 is the POS terminal, as the input device is integrated into the settlement terminal 20, the integrated input device can be used. Further, as the settlement server 30 is usually not installed to selling sections where shoppers would visit, the settlement common process 12 that needs input from customers is not allocated to the settlement server 30.

Further, the communication protocol control process 11 is a process to read and write data, gaining access to the IC card, program change will not rarely take place and its processing load is relatively small, therefore, even the IC card terminal 10 with a CPU having relatively low processing capability and relatively small capacity of memory can sufficiently execute processing, so, that is the reason for leaving this process as the process for the IC card terminal 10. Here, the communication protocol control process 11 can be even allocated to the settlement terminal 20. However, in this case, when the communication protocol control process 11 is to be executed, processing time could be longer because communication between the IC card terminal 10 and the settlement terminal 20 is necessary. Therefore, in order to shorten the processing time as far as possible, by reducing device-to-device communication, it is preferable to leave the communication protocol control process 11, that will not load the IC card terminal 10, on the side of the IC card terminal 10.

From the viewpoint of shortening processing time, it is preferable to allow the IC card terminal 10 to execute all processes, however, in order to embody low-costing of the settlement system, with the load of the IC card terminal 10 and processing time in optimally well balanced state, it is most preferable, as described above, to decentralize the three-stepped processes making up the settlement program to the IC card terminal 10, the settlement terminal 20 and the settlement server 30, respectively.

The following shows detailed description about settlement processing in the first configuration example as described above.

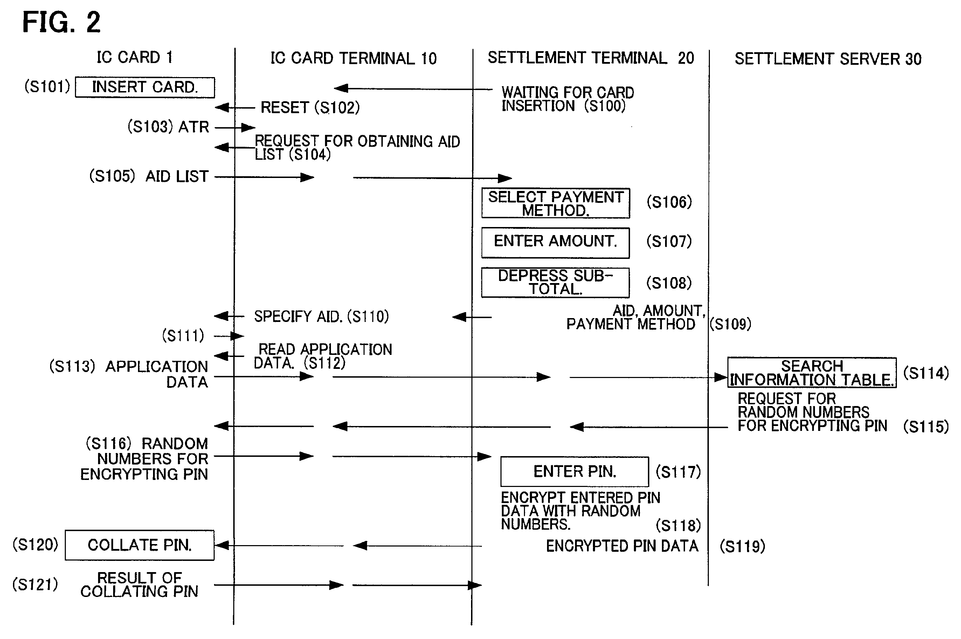

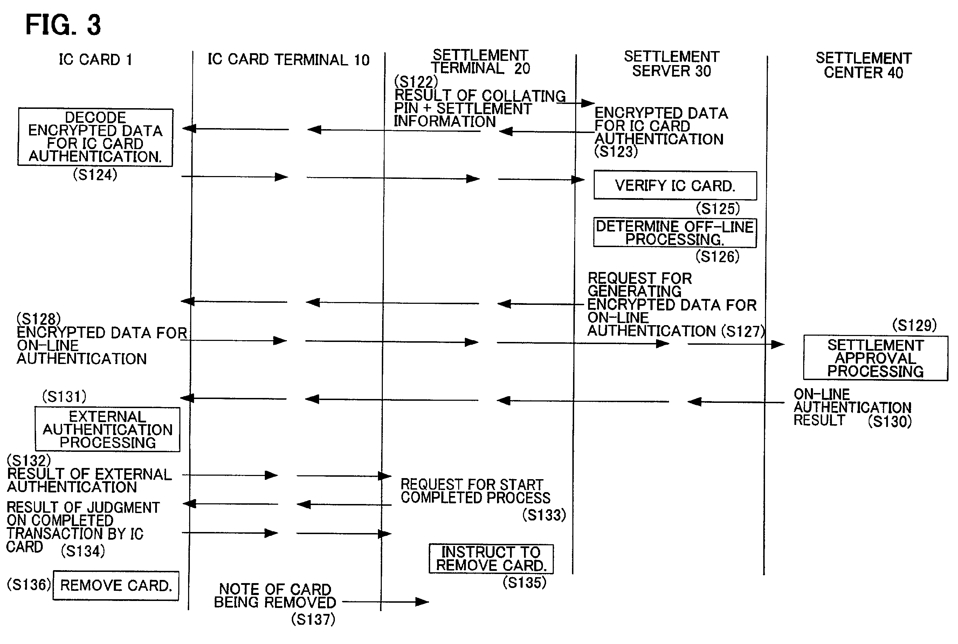

Figs. 2 and 3 are flowcharts of settlement processing in the embodiment of the present invention. In Fig. 2, the settlement terminal 20 sends a card insert waiting signal to the IC card terminal 10, informing that the settlement terminal is in waiting state (S100). In this state, the IC card is inserted into the IC card terminal 10 (S101). Detecting the insertion of the IC card, the IC card terminal 10 sends a reset (Reset) signal to the IC card (S102). When receiving the reset signal, the IC card sends communication protocol information of the IC card to the IC card terminal 10 as an ATR (Answer to Reset) signal (S103). The IC card terminal 10 sends an AID (Application ID) list request signal to the IC card, using communication based on the received communication protocol information (S104). The AID is an ID to identify an applicable application program corresponding to each of a plurality of functions (settlement methods) held by the IC card, and the AID list is a table of AIDs corresponding to each of the functions (settlement methods) held by the IC card. Here, the plurality of settlement methods denotes, for instance, settlement by the credit card function, settlement by electronic money, etc., and further, settlement method may use functions of a plurality of credit cards issued from a plurality of different credit card companies or electronic money function.

When receiving the AID list request signal, the IC card sends the AID list to the IC card terminal 10 (S105). The IC card terminal 10 further transfers the received AID list to the settlement terminal 20.

When the settlement terminal 20 received the AID list, a plurality of settlement methods (for instance, (1) credit card function of A Company, (2) credit card function of B Company, (3) electronic money function of C Company, (4) electronic money function of D Company, etc.) corresponding to the AID list is displayed on an output unit 24, so that the customer selects one method to be used from them, operating the input unit 24 (S106). After that, the customer enters settlement amount (S107), and performs an operation to specify the amount. The operation to specify the amount means, for instance, depressing the key "subtotal" (S108). The following describes about processing in case of using the credit card function.

The settlement terminal 20 informs the IC card terminal 10 of the selected settlement method, AID corresponding to the selected method, and settlement information including entered amount (S109).

When obtaining the AID, the IC card terminal 10 sends an AID specify signal to specify that AID to the IC card (S110). Further, when receiving a reply from the IC card (Sill), the IC card terminal 10 sends a read signal of the application data corresponding to that AID (S112). When receiving the read signal, the IC card sends the application data corresponding to the specified AID to the IC card terminal 10 (S113). The application data is further transferred to the settlement server 30 through the settlement terminal 20.

When receiving the application data, the settlement server 30 reads out information table corresponding to that application data (S114). Each information table corresponding to the individual function (settlement method) registers, for instance, a credit card company code (brand identifier), a corporation code, a partnership identification code, a terminal floor limit amount, etc. The credit card company code is a code to identify the brand of a credit card company which offers credit card function, and the corporation code is a code of the corporation which issues a credit card attaching the brand of that credit card, the partnership identification code is a code of a corporation that offers another credit card function to be attached to the same credit card, and the terminal floor limit amount is the upper limit amount that can be settled (off-line) without an approval of the settlement center of the credit card company.

After reading out the information table, the settlement server 30 sends a random number generation request signal for customer's PIN to the IC card (S115). The IC card generates random numbers based on the signal, and the generated random numbers are sent to the settlement terminal 20 (S116).

The settlement terminal 20 accepts input of the PIN (for instance, secret numbers) from the customer. When the customer entered its own PIN (S117), the settlement terminal 20 encrypts the PIN with the received random numbers (S118), and sends the encrypted PIN to the IC card (S119). The IC card decodes the encrypted PIN with the same random numbers, and collates the decoded PIN with the PIN registered in the IC card (S120). The collated result is informed to the settlement terminal 20 (S121). Then, the settlement terminal 20 informs the settlement server 30 of the result of collating the PINS and the entered settlement information (amount, payment method) (S122).

The settlement server 30 sends the data for verifying the IC card, the data for authentication, including the received result of collating the PINS and settlement information that are already encrypted with a pre-determined public key to the IC card (S123). This encrypted data for verifying the IC card is data for verifying the IC card.

IC card decodes the encrypted data for verifying the IC card received from the settlement server 30, using a secret key corresponding to the public key (S124). By doing so, the IC card can obtain the settlement information. Then, the IC card returns the decoded data to the settlement server 30. The settlement server 30 verifies the IC card, after collating the decoded data and the authentication data before encrypting (S125), and confirms the validity of the IC card.

Moreover, the settlement server 30 makes a judgment whether settlement is processed on-line requiring an approval of the settlement center, or off-line not requiring an approval of the settlement center, collating the information table read out at the step S114 with the amount entered at the step S107 (S126). The following shows a processing example when the judgment is made that settlement is processed on-line.

The settlement server 30 sends an encrypted data generation request for on-line authentication to the IC card (S127). The IC card generates encrypted data for on-line authentication, after encrypting the data for authentication including the settlement information (settlement amount) to be obtained by decoding at the step S124 and the customer information (customer identification number) to be stored on the IC card with a pre-determined public key of the IC card, and sent to the settlement center (S128).

When receiving the encrypted data for on-line authentication, the settlement center decodes the received data with a secret key corresponding to the public key, and executes a given settlement approval processing based on the decoded data (S129). Then, the settlement center sends the result of the approval processing to the IC card (S130). At this time, the settlement center encrypts the decoded data again with a secret key, and sends the encrypted data for on-line authentication to the IC card, together with the result of the approval processing.

The IC card decodes the encrypted data for on-line authentication sent together with the result of the approval processing using the public key, to obtain the decoded data for authentication, and performs authentication processing of the settlement center (external authentication processing), as collating with the data for authentication at the step S128 (S131). In short, the external authentication processing is processing for confirming validity of the settlement center.

When the IC card sent the result of the external authentication processing to the settlement terminal 20 (S132), the settlement terminal 20 sends a complete process start request to the IC card, based on the result of the external authentication processing (S133). Then, the IC card makes a final judgment about the success or failure of the transaction, based on the complete process start request, and sends the result of this final judgment to the settlement terminal 20 (S134). The settlement terminal 20 displays an instruction to pull out the IC card on its display unit 25 (S135). When the customer pulled the IC card out of the IC card terminal 10 (S136), the IC card terminal 10 sends a note to the settlement terminal 20, informing the card has been pulled out (S137). Now, processing is finished.

As described above, in the settlement processing in this embodiment, the IC card terminal 10 controls communication with the IC card, as an interface with the IC card, through the process from the beginning to the end, and executes only the communication protocol control process 11 in the settlement program. Also, the settlement terminal 20 mainly holds information (payment method, amount, PIN, etc.) entered from the input device, as the settlement common process 12, and executes processing regarding that (selecting application, collating PIN, etc.). The settlement server 30 executes the IC card authentication processing to confirm the validity of the IC card, and off-line/on-line judgment processing to check whether the transaction contents need to be approved by the settlement center or not.

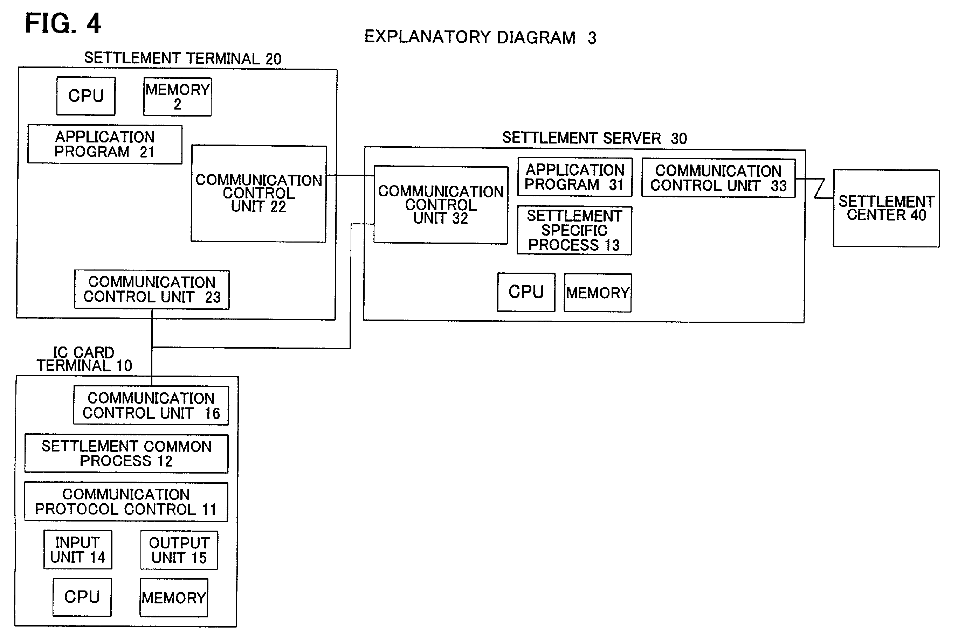

Fig. 4 shows a second configuration example of the settlement system in this embodiment of the present invention. In the second configuration example, compared to the first configuration example shown in Fig. 1, the settlement common process 12 is not executed by the settlement terminal 20, but instead, by the IC card terminal 10. In short, in this configuration, only the settlement specific process 13 of the settlement program that are divided into 3 portions, is shifted from the IC card terminal 10 to the settlement server 30, and even this configuration example can reduce the load of the IC card terminal 10, compared to the conventional configuration, so as to contribute to the cost reduction of the total settlement system. Moreover, as the settlement server 13 executes the settlement specific process 13, the program can be changed easily. Also, in the second configuration example, as the settlement terminal 20 will not execute portion of the settlement processing, the IC card terminal 10 and the settlement server 30 can be directly connected through lines. Of course, like the first configuration example, such a configuration can be approved, where the IC card terminal 10 and the settlement server 30 are connected through the settlement terminal 20.

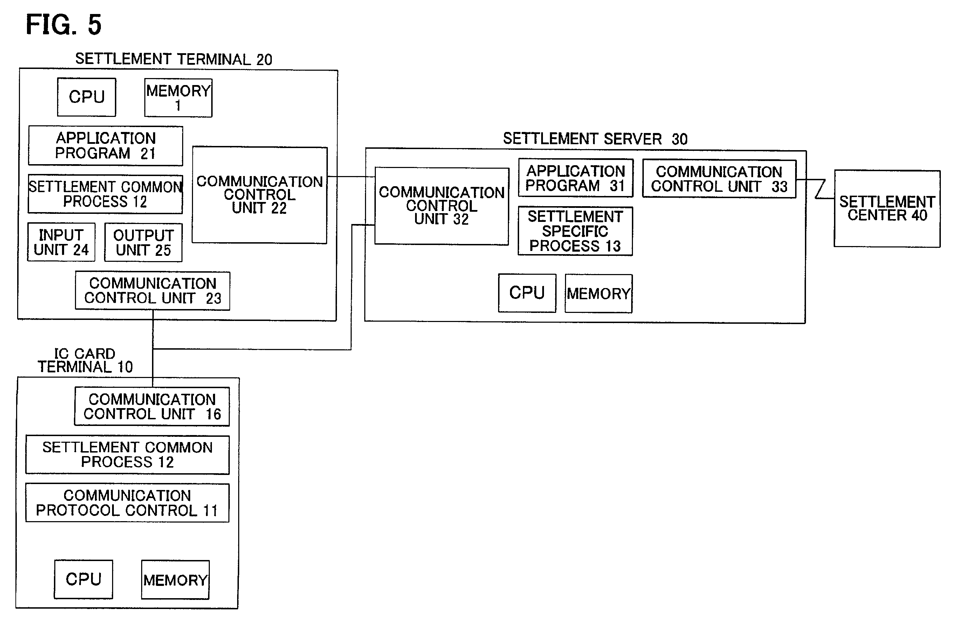

Fig. 5 shows a third configuration example of the settlement system in the embodiment of the present invention. Like the second configuration example, the third configuration example shows a configuration where the settlement common process 12 is not executed by the settlement terminal 20, but instead, by the IC card terminal 10, and as the IC card terminal 10 does not include an input device (numeric keypad, etc.) and an output device (display device, etc.) to be required in the settlement common process 12, the input device and output device to be installed to the settlement terminal 20 are to be used, instead. Like this configuration, the settlement common process 12 is executed by the IC card terminal 10, however, as the IC card terminal 10 does not include the input unit 24 and the output unit 25, cost of the IC card terminal 10 can be reduced, and because the number of the IC card terminals 10 to be used is the largest in the settlement system, this cost reduction could lead up to the total cost reduction of the settlement system.

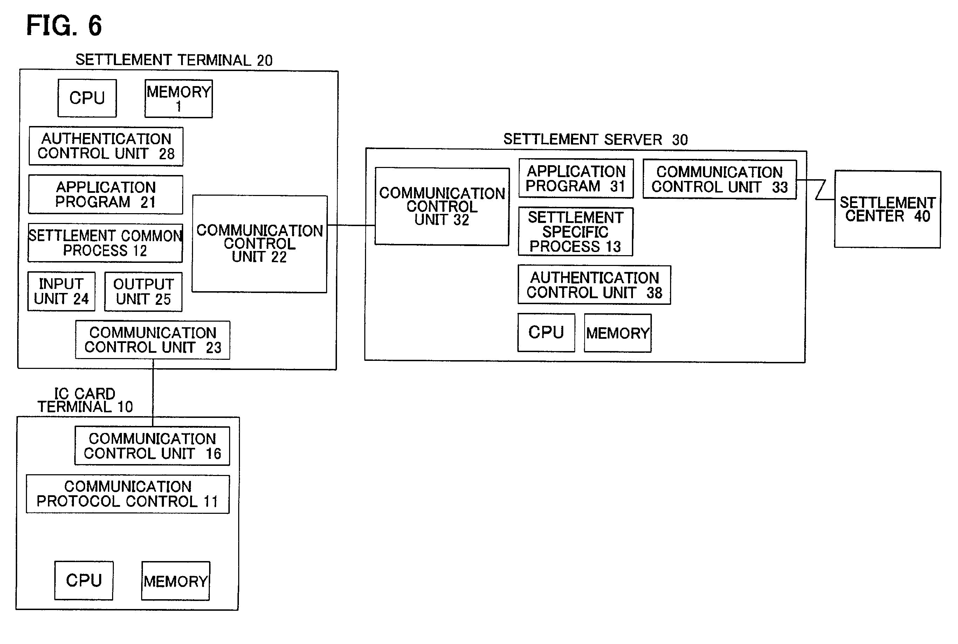

Fig. 6 shows a fourth configuration example of the settlement system in the embodiment of the present invention. Compared to the first configuration example, in the fourth configuration example, to the settlement server 30 and the settlement terminal 20, authentication control units 38 and 28 are installed respectively, and the settlement terminal 20 executes a settlement terminal authentication process to confirm the validity of the settlement server 30. In this embodiment, as the settlement process is distributed to the settlement terminal and the settlement server, except the IC card terminal, it is preferable from the viewpoint of ensuring security that each device verifies its communicating partner, when any device-to-device (the IC card terminal, the settlement terminal and the settlement server) communication takes place.

The fourth configuration example shows a configuration where the settlement server 30 and the settlement terminal 20 execute the authentication processing.

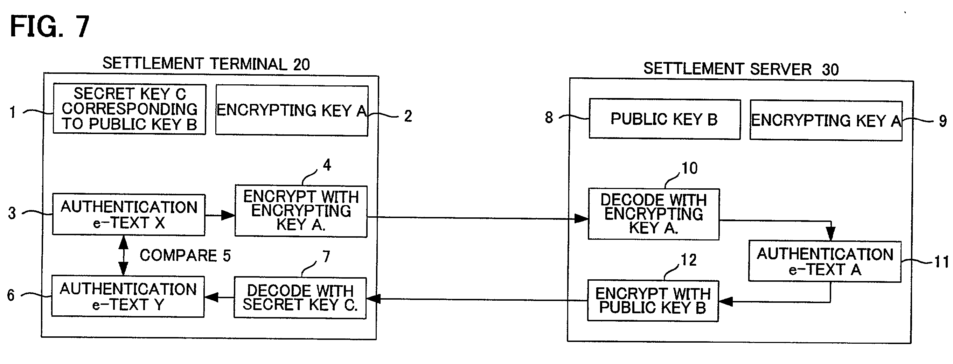

Fig. 7 describes about authentication processing method. The authentication process is to be executed in advance, before the settlement process shown in Figs. 2 and 3 is executed. First of all, the settlement terminal 20 generates a pre-determined e-text X for authentication, encrypts the text with a pre-determined encrypting key A, and eventually sends the encrypted e-text to the settlement server 30. The settlement server 30 decodes the encrypted e-text with the same encrypting key A, and encrypts the decoded authentication e-text X with a public key B. The settlement server 30 sends the encrypted e-text to the settlement terminal 20, then, the settlement terminal 20 decodes the encrypted e-text with a secret key C, and compares the decoded authentication e-text Y with the original authentication e-text X, and if agreed, the settlement terminal 20 judges that the settlement server 30 is valid.

In the above processing, if the settlement terminal 20 is replaced with the settlement server 30, and the settlement server 30 is replaced with the settlement terminal 20, process is reversed, in other words, authentication processing of the settlement terminal by the settlement server 30. Also, it is allowed that these two devices mutually execute authentication process.

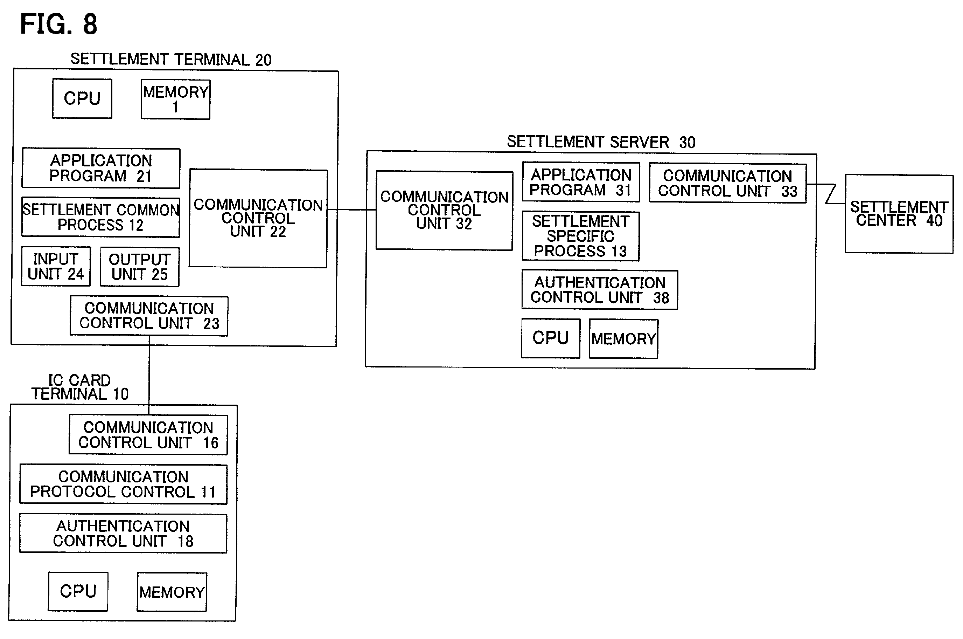

Fig. 8 shows a fifth configuration example of the settlement system in the embodiment of the present invention. Unlike the fourth configuration example, the fifth configuration example shows a configuration where authentication processing is performed between the settlement server 30 and the IC card terminal 10. In this configuration, the IC card terminal 10 has an authentication control unit 18 to execute authentication processing shown in Fig. 7.

Although not being noted in the drawing, it is also approved that authentication processing is performed between the IC card terminal 10 and the settlement terminal 20. It is further approved that authentication processing is performed among three devices, the IC card terminal 10, the settlement terminal 20 and the settlement server 30.

Moreover, when the settlement server 30 is a general purpose server, a program corresponding to process to be allocated to the settlement server 30 may be stored in the hard disk drive, the main storage of the settlement server 30, or, the program may be imbedded in a dedicated device (for instance, LSI) mounted on a settlement board added to the settlement server 30. By this measure, security of security information (encrypting key, etc.) to be contained in a program allocated to the settlement server can be improved.

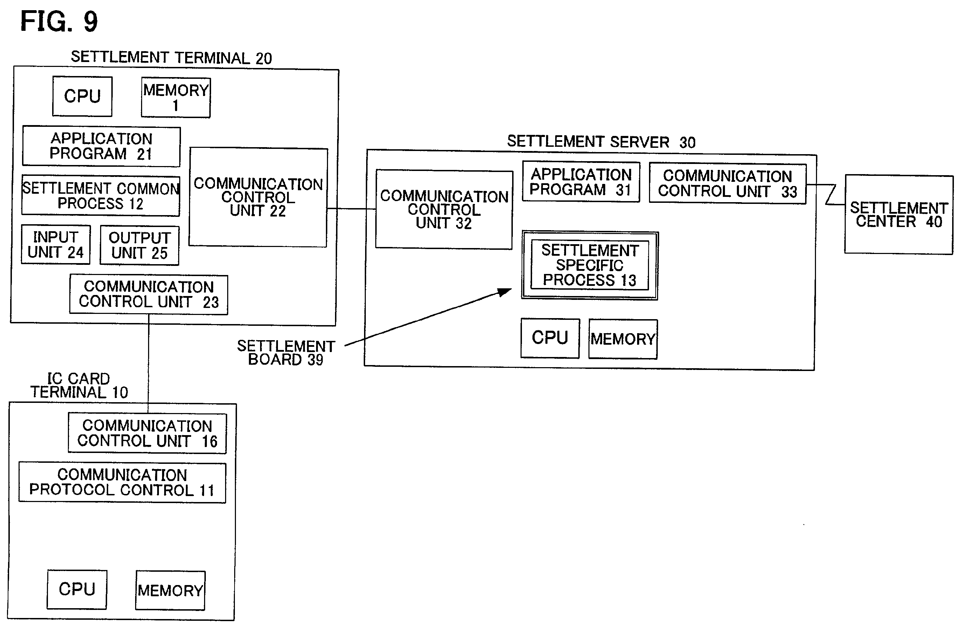

Fig. 9 shows a configuration example of the settlement system having the settlement server that amounts the settlement board. In Fig. 9, the LSI on the settlement board 36 executes the settlement specific process 13 allocated to the settlement server 30. At the settlement board 39, processing that must ensure security, including the device-to-device authentication processing, processing of portion of the settlement common process to be allocated to the settlement terminal 20 (for instance, process of collating PINs, etc.) may be executed, not limited to the settlement specific process 13.

Also, in the embodiment as described above, the settlement terminal 20 and the settlement server 30 may be a POS terminal and a POS server in a POS system, respectively, or any terminal and server of any other system. For instance, such a system may be tolerated, where the settlement terminal 20 is an automatic vending machine that can make settlement not only by cash but also by the IC card, and the settlement server is a server monitoring sales of the automatic vending machine through a network (that is to say, a kind of POS server).

The transaction medium is not limited to the IC card, but may be, for instance, any transaction medium not in the form of card.

As set forth hereinabove, according to the present invention, in the settlement system comprising the IC card terminal, the settlement terminal and the settlement server, settlement processing by the IC card, that has so far been executed by the IC card terminal, is to be further distributed to the settlement terminal and the settlement server. By the distribution, processing load by the IC card terminal would be reduced, and as a result, the IC card terminal would not need a CPU having a high processing capability or a large capacity of memory, bringing cost of the IC card terminal down, so that the total settlement system can embody low-costing.

The protective scope of the present invention covers the inventions defined in the claims and their equivalents, but is not limited to the above embodiments.

## Claims

1. A settlement system, which is adapted to execute settlement processes or programs corresponding to a plurality of settlement functions, and which is adapted to execute settlement processing or program using a transaction medium that stores information of at least one settlement function, the settlement system comprising:
a transaction medium processing terminal to communicate with the transaction medium;
a settlement terminal to communicate and connect to the transaction medium processing terminal; and
a settlement server to communicate and connect to the settlement terminal,
wherein a plurality of processing steps or programs making up the settlement processes or programs to be executed are distributed and allocated to the transaction medium processing terminal, the settlement terminal and the settlement server, and wherein each of the transaction medium processing terminal, the settlement terminal and the settlement server is adapted to execute, or is for executing, its own allocated processing step or program.

2. The settlement system according to claim 1, wherein
of the plurality of processing steps or programs, processing or program to read and write information from/to the transaction medium is allocated to the transaction medium processing terminal,
of the plurality of processing steps, processing or program common to the plurality of settlement functions is allocated to the settlement terminal, and
of the plurality of processing steps or terminal, processing or programs intrinsic to the plurality of settlement functions or programs are allocated to the settlement server.

3. The settlement system according to claim 1 or 2, wherein
of the plurality of processing steps or programs, processing or program to read and write information from/to the transaction medium is allocated to the transaction medium processing terminal,
of the plurality of processing steps or programs, processing or programs with relatively low change frequencies is allocated to the settlement terminal, and
of the plurality of processing steps or programs, processing or programs with relatively high change frequencies is allocated to the settlement server.

4. The settlement system according to any of claims 1 to 3,
wherein
of the plurality of processing steps or programs, processing or program to read and write information from /to the transaction medium is allocated to the transaction medium processing terminal,
of the plurality of processing steps or programs, processing or programs requiring external data input is allocated to the settlement terminal, and
of the plurality of processing steps or programs, processing or programs with relatively high change frequencies is allocated to the settlement server.

5. The settlement system according to claim 4, wherein the settlement terminal comprises a data input unit, but the transaction medium processing terminal comprises no data input unit.

6. The settlement system according to any of claims 1 to 5,
wherein
at least one of the transaction medium processing terminal, the settlement terminal and the settlement server is adapted to execute authentication processing or program to at least another one.

7. The settlement system according to any of claims 1 to 6,
wherein
the settlement server has a settlement board with a dedicated device mounted thereon to execute the allocated processing or program.

8. The settlement system according to any of claims 1 to 7,
wherein
the number of the transaction medium processing terminals is more than the numbers of the settlement terminals and the settlement servers.

9. The settlement system according to any of claims 1 to 8,
wherein
the number of the settlement terminals is more than the number of the settlement servers.

10. The settlement system according to any of claims 1 to 9,
wherein
the settlement terminal and the settlement server are a POS (Point of Sales) terminal and a POS server, respectively, which make up a POS system to manage sales of merchandise.

11. A settlement system which is adapted to execute, or capable of, settlement processings or programs corresponding to a plurality of settlement functions or programs, and to execute settlement processing or program using a transaction medium that stores information of at least one settlement function, the settlement system comprising:
a transaction medium processing terminal to communicate with the transaction medium; and
a settlement server to connect to the transaction medium processing terminal for making communication,
wherein plurality of processing steps or programs making up the settlement processing or program to be executed are distributed and allocated to the transaction medium processing terminal and the settlement server, and wherein each of the transaction medium processing terminal and the settlement server is adapted to execute processing steps or programs allocated thereto.

12. The settlement system according to claim 11, wherein
of the plurality of processing steps or programs processing or program with relatively low change frequencies is allocated to the transaction medium processing terminal, and
of the plurality of processing steps or programs processing or program with relatively high change frequencies is allocated to the settlement server.
